# EUROPÄISCHE PATENTSCHRIFT

(11) **EP 0 446 794 B1**
(45) Veröffentlichungstag und Bekanntmachung des Hinweises auf die Patenterteilung: **18.05.1994**
(21) Anmeldenummer: 91103540.0
(22) Anmeldetag: 08.03.1991
(51) Int. Cl.: G01N 21/85, G01N 21/31

(54) **Verfahren zur in-situ-Überwachung der Oberflächenfeuchte von bewegten Kaffeebohnen**
Method for in-situ monitoring of superficial humidity of moving coffee beans
Procédé de surveillance en site de l'humidité superficielle de grains de café en déplacement

(30) Priorität: 15.03.1990 DE 4008279
(43) Veröffentlichungstag der Anmeldung: 18.09.1991
(73) Patentinhaber: KERNFORSCHUNGSZENTRUM KARLSRUHE GMBH, D-76021 Karlsruhe (DE); Probat-Werke von Gimborn GmbH & Co. KG, 46446 Emmerich (DE)
(72) Erfinder: Rapp, Wilhelm, W-7520 Bruchsal 4 (DE)

(56) Entgegenhaltungen:
- DE-A- 3 540 751
- DE-A- 3 601 931
- DE-C- 3 720 388
- US-A- 4 097 743

## Beschreibung

Die Erfindung betrifft ein Verfahren, geröstete Kaffeebohnen gezielt zu befeuchten.

Derartige Verfahren dienen dazu, nachdem die Röstung der Kaffeebohnen überwacht, gesteuert und nach Erreichen des vorgegebenen Röstgrads beednet wurde, zur vollen Entfaltung des Kaffeearomas den gerösteten Kaffeebohnen ein vorgegebenes Maß an Feuchtigkeit beizugeben. Von Gesetzeswegen ist der Feuchtegehalt gerösteter Kaffeebohnen allerdings begrenzt.

In der US-PS 4,097,743 wird ein Gerät und ein Verfahren zur Bestimmung des Feuchtegehaltes eines Prüflings beschrieben. Die wesentlichen Teile des Apparates sind Lichtquelle, Chopperrad. Durch das Chopperrad wird abwechselnd der Meß- und Referenzstrahl erzeugt. Die Messung geschieht schließlich auf absorptionsoptischen Prinzipien. Der Nachteil besteht in den abwechselnden Detektion der Meß- bzw. Referenzstrahlen.

Die DE-OS 31 49 869 beschreibt eine Vorrichtung zur Feuchtebestimmung mit Hilfe des Lichts zweier Infrarotluminiszenzdioden. Davon emittiert eine Diode eine Meßwellenlänge, die in Wasser absorbiert wird, die andere eine Referenzwellenlänge, die keine oder nur wenig Absorption in Wasser erfährt. Die Referenzwellenlänge und die vom Prüfling reflektierte Intensität der Meßwellenlänge wird abwechselnd gemessen. Dadurch ist in der Signalweiterverarbeitung eine Art sample-and-hold-Betrieb notwendig. Der Nachteil ist entsprechend dem aus der oben zitierten US-PS 4,097,743. Darüber hinaus ist nur eine begrenzte Wahl der Meßwellenlängenbereiche möglich.

Eine robuste Vorrichtung zur periodischen Erfassung des Wassergehaltes laufender Bandgüter mittels Absorptionsvergleichsmessung infraroter Strahlung wird in der DD-PS 253 877 beschrieben.

In der DE-OS 36 01 931 schließlich wird eine Anordnung zur kontinuierlichen Feuchtemessung von Holzpartikeln nach dem Infrarot-Reflexionsmeßprinzips vorgestellt.

Eine Röstmaschine ist in der DE-OS 29 41 201 offengelegt. Das eine Hauptbrennkammer verlassende heiße Abgase erwärmt über einen Wärmeaustauscher Frischgas vor dem Eintritt in die Hauptbrennkammer. Neben der Röstung des Röstgutes kann dem Frischgas vor dem Eintritt in die Hauptbrennkammer noch fein verteilt Wasser über eine Befeuchtungseinrichtung zugesetzt werden.

Bekannt ist auch ein Verfahren zur in-situ-Überwachung des Röstgrades bewegter Kaffeebohnen aus der DE-PS 37 20 388. Die Röstung wird überwacht, gesteuert und nach Erreichen des vorgegebenen Röstgrades beendet. Unmittelbar nach Entnahme der gerösteten Kaffeebohnen aus dem Röstofen wird die Charge auf einer Vorrichtung im Ruhezustand mit einer bestimmten Menge Wasser besprüht. Die Wassermenge zur Befeuchtung wird aus einer Probe davon nach und nach ermittelt.

Der Erfindung liegt die Aufgabe zugrunde, ein Verfahren anzugeben, das unter Berücksichtigung der Farbänderung des Röstgutes während der Oberflächenbefeuchtung die genaue Wassermengenzusetzung zur Befeuchtung der sich im Röstofen rasch bewegenden, unmittelbar zuvor gerösteten Kaffeebohnen überwacht, steuert und nach Erreichen des vorgegebenen Oberflächenbefeuchtungsgrades den Vorgang beendet.

Die Aufgabe wird erfindungsgemäß durch die kennzeichnenden Merkmale des Verfahrensanspruchs 1 gelöst. Die weiteren Ansprüche beschreiben vorteilhafte Schritte zur Durchführung des Verfahrens.

Die mit der Erfindung erzielten Vorteile bestehen darin, daß auf bisher unumgängliche Proberöstungen, wie in der DE-OS 37 20 288 beschrieben, zur Ermittlung des Feuchtegehaltes von Kaffeebohnen verzichtet werden kann. Durch das erfindungsgemäße Verfahren wird durch kontinuierliches Messen des Röstgrades und der vorhandenen Oberflächenfeuchte auf der Kaffeebohnenoberfläche die gezielte Feindosierung der zugegebenen Wassermenge bei der unmittelbar sich an die Röstung anschließenden Oberflächenbefeuchtung des bewegten Röstgutes erst durchführbar. Die Farbänderung (Dunklerwerden) des Röstgutes während des Befeuchtens wird ebenfalls kontinuierlich gemessen und in einem Rechner ausgewertet. Der Prozeß wird dementsprechend gesteuert oder gegebenenfalls beendet.

Ein Ausführungsbeispiel der Erfindung ist in der Zeichnung dargestellt und wird im folgenden näher beschrieben. Es zeigen:

Fig. 1
Schematischer Aufbau einer Einrichtung zur Überwachung des Röstgrades und der Oberflächenfeuchte von bewegten Kaffeebohnen.

Fig. 2
Reflektionsspektrum trockener gerösteter und befeuchteter gerösteter, Kaffeebohnen.

Fig. 3
Der Logarithmus des Quotienten aus der Intensität bei 1450 nm und 1040 nm in Abhängigkeit der prozentualen Feuchte.

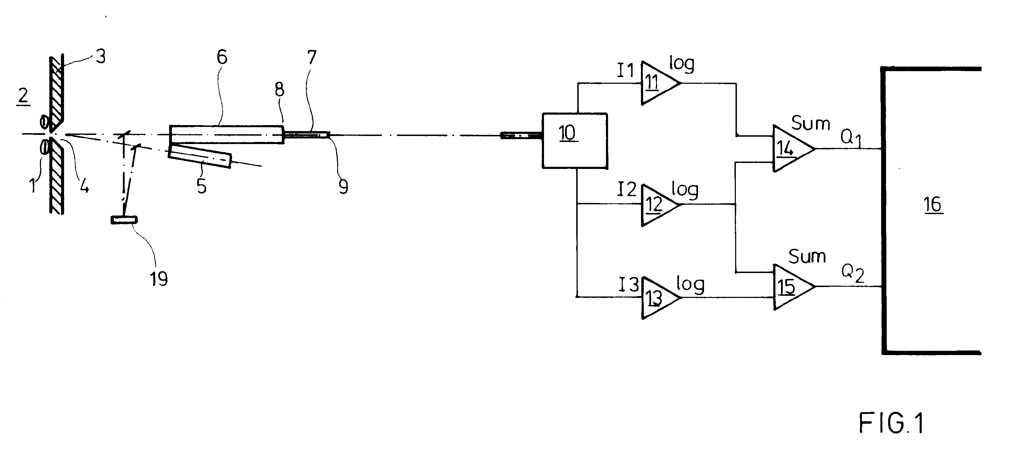

Figur 1 zeigt den schematischen Aufbau zur Durchführung des Röstverfahrens und des Befeuchtungsverfahrens unter Berücksichtigung der Farbänderung (Dunklerwerden).

Während des Röstvorgangs befinden sich die Kaffeebohnen 1 in einer schnellen Umlaufbewegung im Röstofen 2. An einem Umlenkpunkt befindet sich in der Gehäusewand 3 des Röstofens 2 eine Öffnung 4, durch welche die rasch sich daran vorbeigewegenden Kaffeebohnen 1 beobachtet werden. Mit einer Lichtquelle 5 wird durch diese Öffnung 4 Licht auf die Kaffeebohnen eingestrahlt. Die Öffnung 4 wird auf die Stirnfläche 8 eines Lichtleiters 7 abgebildet. Die Fasern des Lichtleiters 7 sind statistisch gemischt, so daß an der der Öffnung 4 abgewandten Stirnfläche 9 des Lichtleiters 7 ein örtlich zerstörtes Bild der Öffnung 4 erscheint, d. h. die Intensität des von der Öffnung 4 reflektierten Lichts wird über den Lichtleiterquerschnitt an der Stirnfläche 9 gleichverteilt.

Das Bild der der Öffnung 4 abgewandten Stirnfläche 9 wird schließlich dem Quotientenmodul 10 zugeführt. In ihm wird das Licht von dem zerstörten Bild der Öffnung 4 über Interferenzfilter in drei räumlich getrennte Teilstrahlen mit den jeweiligen Wellenlängenbereichen z. B. 920, 1040 und 1450 nm aufgeteilt und entsprechend der Wellenlänge lichtempfindlichen Photodioden zugeführt. In den Dioden wird dadurch ein der Intensität proportionales elektrisches Signal I₁, I₂ bzw. I₃ erzeugt und Logarithmierern zugeführt.

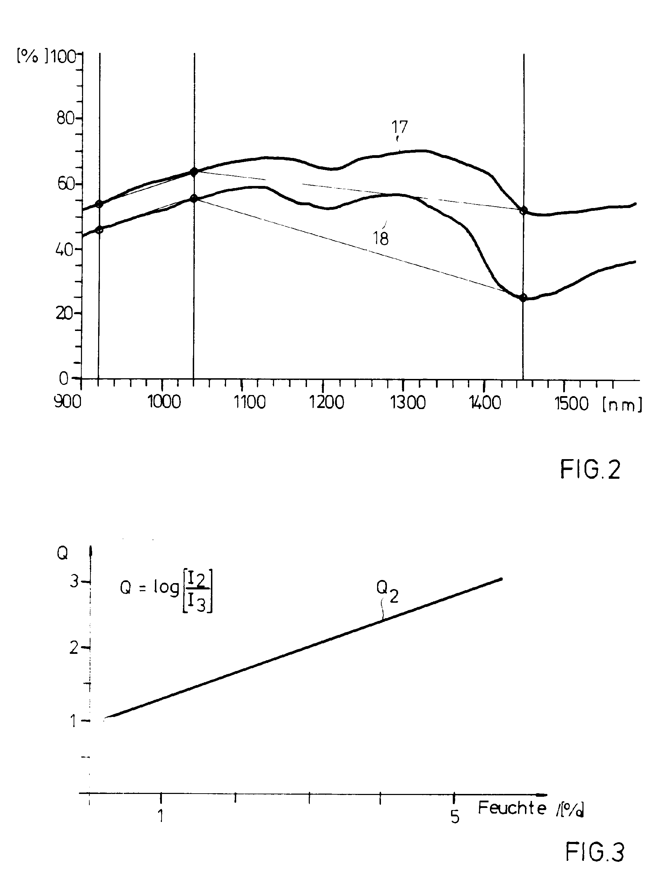

Die Differenz Q₁ aus dem logarithmierten Signal I₁, das von der kleinen, nicht von Wasser absorbierten Wellenlänge λₖ hervorgerufen wird und dem logarithmierten Signal I₂, von der mittleren, ebenfalls nicht vom Wasser absorbierten Wellenlänge λₘ hervorgerufen, ergibt ein Maß für den Röstgrad, d. h. der Farbe der gerade gerösteten Kaffeebohnen. Die Kalibrierung des Farbsignals erfolgt in regelmäßigen Zeitabständen über ein in den Strahlengang eingeblendetes Farbnormal 19. Das Farbnormal 19 kann z. B. ein Emailstück sein. Die Differenz Q₂ aus dem logarithmierten Signal I₂ und dem logarithmierten Signal I₃ der stark vom Wasser absorbierten Wellenlänge λ_{g} ist ein Maß für die restliche Oberflächenfeuchte der Kaffeebohnen während des Röstens. Nach dem Röstvorgang (bei ca. 400° C), unmittelbar vor dem Befeuchten enthalten die Kaffeebohnen nur noch eine minimale Restfeuchte. Die daher detektierte restliche Oberflächenfeuchte dient als Maß zur Feinregulierung der anschließenden Befeuchtung der im Röstofen bewegten Kaffeebohnen. Durch die weitere, kontinuierliche Überwachung der Farbänderung während des Befeuchtens, und durch die Kenntnis des gesamten spektralen Reflexionsverlaufes (siehe Fig. 2) der Bohnenoberfläche, läßt sich die Verfälschung des teilweise wasserabsorptionsabhängigen Quotienten korrigieren.

Ein an die Analogelektronik angeschlossener Rechner 16 verarbeitet programmgemäß das Farbsignal Q₁ und das Feuchtesignal Q₂ für die Überwachung, Steuerung und Beendigung des Röstvorganges und des unmittelbar sich anschließenden Befeuchtungsvorganges der sich im Röstofen bewegenden Kaffeebohnen.

In Figur 2 ist das Reflexionsspektrum dargestellt. Die obere Kurve 17 zeigt den spektralen Reflexionsverlauf in Prozent für gerösteten Kaffee. Die untere Kurve 18 zeigt den spektralen Verlauf für den befeuchteten Kaffee. Im Bereich der Wellenlängen (λₖ ≦ λ ≦ λₘ₎, in dem Wasser nicht oder zumindest nur vernachlässigbar absorbiert wird, ist die Reflexionsänderung für getrocknete als auch an der Oberfläche feuchte Kaffeebohnen gleich, dagegen nicht im Bereich (λₘ ≦ λ ≦ λ_{g}) der mittleren, nicht vom Wasser absorbierten Wellenlänge ₘ und der stark vom Wasser absorbierten, oberen Wellenlänge. Die Verfälschung des wasserabsorptionsabhängigen Quotienten Q₂ läßt sich somit erfassen und daher berücksichtigen.

In Figur 3 ist der Verlauf des Feuchtesignals Q₂ in Abhängigkeit der prozentualen Feuchte der Kaffeebohnen dargestellt.

Das Dunklerwerden durch zunehmende Feuchte drückt sich darin aus. Letztlich bedeutet es abnehmende Lichtreflektion an der Kaffeebohnenoberfläche mit zunehmender Feuchte. Dieser Effekt zeigt sich z. B. auch an Sand oder Stein mit zunehmender Befeuchtung.

### Bezugszeichenliste

- 1: Kaffeebohnen
- 2: Röstofen
- 3: Gehäusewand
- 4: Öffnung
- 5: Lichtquelle
- 6: Optik
- 7: Lichtleiter
- 8: der Öffnung 4 zugewandte Stirnfläche
- 9: der Öffnung 4 zugewandte Stirnfläche
- 10: Quotientenmodul
- 11: Logarithmus
- 12: Logarithmus
- 13: Logarithmus
- 14: Differenzbildner für Farbe
- 15: Differenzbildner für Feuchte
- 16: Rechner
- 17: obere Kurve
- 19: Farbnormal
- 18: untere Kurve
- I₁: Signal von λₖₗₑᵢₙ
- I₂: Signal von λₘᵢₜₜₑₗ
- I₃: Signal von λ_{groß}
- Q₁: Farbsignal
- Q₂: Feuchtesignal

## Patentansprüche

1. Verfahren zur in-situ-Überwachung der Oberflächenfeuchte von bewegten Kaffeebohnen bei deren Rösten, wobei sich die Kaffeebohnen während des Röstens an einem Beobachtungsfenster eines Röstofens rasch vorbeibewegen und dort von einer Lichtquelle beleuchtet werden, die wenigstens zwei verschiedene infrarote Wellenlängen enthält, die beide keine Absorption in Wasser zeigen, deren von der Kaffeebohnenoberfläche reflektierte Intensitäten kontinuierlich gemessen, der Quotient aus beiden Intensitäten zur Bestimmung des augenblicklichen Röstgrades, der in regelmäßigen Zeitabständen mit einem Farbnormal verglichen wird, verwendet wird und die Kaffeebohnen nach Erreichen des vorgegebenen Röstgrades mit einer vorgegebenen Menge Wasser befeuchtet werden, dadurch gekennzeichnet, daß
- die Intensität einer weiteren von den zu röstenden, sich rasch am Beobachtungsfenster vorbeibewegenden Kaffeebohnen reflektierten infraroten Wellenlänge, die Absorption in Wasser zeigt, während des Röstens kontinuierlich gemessen wird,
- der Quotient aus dieser und aus einer der reflektierten Intensitäten der in Wasser nicht absorbierten, anderen Wellenlängen zur Bestimmung der an der Kaffeebohnenoberfläche während des Röstens vorhandenen Oberflächenfeuchte benutzt wird,
- nach Erreichen des vorgegebenen Röstgrades den weiterhin sich im Röstofen rasch bewegenden Kaffeebohnen in Abhängigkeit des Röstgrades und der gemessenen vorhandenen Oberflächenfeuchte Wasser zur Befeuchtung zugegeben wird,
- der Quotient der Intensitäten der in Wasser eine Absorption zeigenden Wellenlänge und der einen, in Wasser keine Absorption zeigenden Wellenlänge kontinuierlich gebildet und in einem angeschlossenen Rechner zur Überwachung und Steuerung der Wasserzugabe zur Befeuchtung verwendet wird,
- eine Farbänderung der bewegten Kaffeebohnen durch die Befeuchtung im Rechner korrektiv berücksichtigt wird, wodurch ein Proberösten einer Kaffeebohnen-Charge überflüssig wird.

2. Verfahren nach Anspruch 1, dadurch gekennzeichnet, daß das Beobachtungsfenster auf die Stirnseite eines Lichtleiters abgebildet wird, dessen Lichtleiterfasern statistisch gemischt sind, wodurch das Bild des Beobachtungsfensters zerstört und eine mittlere Ausleuchtung über den Lichtleiterquerschnitt an seiner Austrittsseite erreicht wird.

3. Verfahren nach Anspruch 2, dadurch gekennzeichnet, daß die vom Beobachtungsfenster wegweisende Stirnseite des Lichtleiters auf einen Quotientenmodul abgebildet wird und das dort einfallende Licht zunächst in drei räumlich getrennte Strahlen, die jeweils nur eine zu messende Wellenlänge enthalten, aufgeteilt wird, um dann jeweils eine spektral empfindliche Photodiode auszuleuchten.

4. Verfahren nach Anspruch 3, dadurch gekennzeichnet, daß in einer an die drei Photodioden angeschlossenen Analogelektronik des Quotientenmoduls die Quotienten der entsprechenden Intensitäten zur Bestimmung der Röstfarbe und der Oberflächenfeuchte gebildet werden.

5. Verfahren nach Anspruch 4, dadurch gekennzeichnet, daß beide Quotienten einem Rechner zugeführt werden, von dem aus das Rösten und anschließend die Oberflächenfeuchte überwacht, gesteuert und die Wasserzugabe zur Befeuchtung berechnet wird.

6. Verfahren nach einem der vorangehenden Ansprüche, dadurch gekennzeichnet, daß während der Messung des Röstgrades in regelmäßigen Zeitabständen das Farbnormal (19) in den Strahlengang eingeblendet wird, mit dem der erreichte Röstgrad verglichen wird.

## Claims

1. Method of monitoring in situ the surface humidity of moving coffee beans during their roasting process, the coffee beans moving rapidly past an observation window of a roasting furnace during the roasting process and being illuminated there by a light source containing at least two different infra-red wavelengths, which both exhibit no absorption in water, the intensities of said wavelengths, which are reflected by the surface of the coffee beans, being continuously measured, the quotient from both intensities being used to determine the actual degree of roasting which is compared with a colour standard at regular intervals of time, and the coffee beans being moistened with a predetermined quantity of water after the predetermined degree of roasting has been achieved, characterised in that
- the intensity of an additional infra-red wavelength, which is reflected by the coffee beans, which are to be roasted and move rapidly past the observation window, and which wavelength exhibits absorption in water, is continuously measured during the roasting process,
- the quotient from this intensity and from one of the reflected intensities of the other wavelengths, which are not absorbed in water, is used to determine the superficial humidity on the surface of the coffee beans during the roasting process,
- after the predetermined degree of roasting has been achieved, water for moistening purposes is added to the coffee beans, which continue to move rapidly in the roasting furnace, in dependence on the degree of roasting and the existing measured surface humidity,
- the quotient of the intensities of the wavelength exhibiting an absorption in water and of the one wavelength exhibiting no absorption in water is continuously formed and used in an attached computer to monitor and control the addition of water for moistening purposes,
- a colour change in the moving coffee beans, caused by the humidification, is correctively compensated-for in the computer, whereby a trial roasting of a charge of coffee beans becomes superfluous.

2. Method according to claim 1, characterised in that an image of the observation window is formed on the end face of a photoconductor, the optical fibres of which are statistically mixed, whereby the image of the observation window is destroyed, and an average illumination is achieved over the cross-section of the photoconductor at its outlet end.

3. Method according to claim 2, characterised in that an image of the end face of the photoconductor directed away from the observation window is formed on a quotient modulus, and the light impinging there is initially split-up into three spatially separated beams, which each only contain one wavelength to be measured, in order then to illuminate a respective spectroscopically sensitive photodiode.

4. Method according to claim 3, characterised in that the quotients of the corresponding intensities for determining the roasting colour and the surface humidity are formed in an analog electronic system, attached to the three photodiodes, for the quotient modulus.

5. Method according to claim 4, characterised in that both quotients are fed to a computer, from where the roasting process and subsequently the surface humidity are monitored and controlled, and the addition of water for moisturising purposes is calculated.

6. Method according to one of the preceding claims, characterised in that the colour standard (19) is inserted into the path of the light beam while the degree of roasting is being measured at regular intervals of time, and the degree of roasting achieved is compared with said standard.

## Revendications

1. Procédé pour la surveillance in-situ de l'humidité superficielle de grains de café en déplacement lors de leur torréfaction, dans lequel les grains de café pendant la torréfaction se déplacent rapidement en passant devant une fenêtre d'observation d'un four de torréfaction et là sont éclairés par une sourse de lumière, qui contient au moins deux longueurs d'onde différentes infrarouges, qui toutes les deux ne présentent pas d'absorption dans de l'eau, dont les intensités réfléchies par la surface des grains de café sont mesurées continuellement, dans lequel le quotient provenant des deux extrémités est utilisé pour déterminer le degré de torréfaction momentané, qui est composé à des intervalles de temps régulier avec un étalon de couleur et les grains de café après obtention du degré de torréfaction préfixé sont humidifiés avec une quantité d'eau prédéterminée,
caractérisé en ce que :
- l'intensité d'une autre longueur d'onde infrarouge réfléchie par les grains de café à torréfier, passant rapidement devant une fenêtre d'observation, longueur d'onde qui montre l'absorption dans de l'eau, pendant que la torréfaction est mesurée en continu,
- le quotient de cette intensité et d'une des intensités réfléchies des autres longueurs d'onde non absorbées dans de l'eau est utilisé pour déterminer l'humidité superficielle existant à la surface des grains de café pendant la torréfaction,
- après obtention du degré de torréfaction prédéterminé, on ajoute de l'eau pour l'humidification aux grains de café continuant à se déplacer rapidement, en fonction du degré de torréfaction et de l'humidité superficielle existante mesurée,
- le quotient des intensités de la longueur d'onde présentant une absorption dans l'eau et de l'une des longueurs d'onde ne présentant pas d'absorption dans l'eau est formée en continu et est utilisé dans un ordinateur correspondant pour surveiller et réguler l'apport d'eau d'humidification,
- un changement de couleur des grains de café en déplacement, par suite de l'humidité est prise en considération pour correction dans l'ordinateur, par suite de quoi une torréfaction d'essai d'une charge de grains de café est superflue.

2. Procédé selon la revendication 1, caractérisé,
- en ce que la fenêtre d'observation est représentée en image sur la face frontale d'un guide de lumière, dont les fibres sont mélées statistiquement, par suite de quoi l'image de la fenêtre d'observation est détruite et une illumination moyenne est obtenue sur la section transversale du guide de lumière sur sa face de sortie.

3. Procédé selon la revendication 2, caractérisé :
- en ce que la face frontale du guide de lumière éloignée de la fenêtre d'observation est représentée sur un module de quotient et là la lumière incidente est tout d'abord répartie en trois faisceaux séparés dans l'espace, qui contiennent chacun une seule longueur d'onde à mesurer, pour éclairer respectivement une photodiode sensible du point de vue spectral.

4. Procédé selon la revendication 3, caractérisé :
- en ce que dans une électronique analogique raccordée aux trois photodiodes du module des quotients, les quotients des intensités correspondantes sont formés pour déterminer la couleur de torréfaction et l'humidité superficielle.

5. Procédé selon la revendication 4, caractérisé :
- en ce que deux quotients sont amenés à un ordinateur à partir duquel la torréfaction et ensuite l'humidité superficielle sont surveillées, régulées et l'appoint d'eau pour l'humidification est calculé.

6. Procédé selon l'une des revendications précédentes, caractérisé :
- en ce que pendant la mesure du degré de torréfaction l'étalon de couleur (19) est superposé à des intervalles de temps réguliers à la marche du rayon, étalon avec lequel on compare le degré de torréfaction atteint.
